# EUROPEAN PATENT APPLICATION

(11) **EP 4 071 872 A1**
(43) Date of publication of application: **12.10.2022**
(21) Application number: 21167334.8
(22) Date of filing: 08.04.2021
(51) Int. Cl.: H01M 10/0525, H01M 10/0569, H01M 4/36, H01M 4/38, H01M 4/525, H01M 4/587, H01M 10/0567, H01M 10/0568

(54) **LIQUID ELECTROLYTE FOR LITHIUM SECONDARY BATTERIES**

(71) Applicant: Solvay SA, 1120 Brussels (BE)
(72) Inventor: CHOI, Ji-Ae, 04131 Mapo-Gu, Seoul (KR); MOON, Eun-Ji, 03759 Seodaemun-gu, Seoul (KR); LEE, Jong-Hyun, 18479 Hwaseong-si, Gyeonggi-do (KR); WON, Ji-Hye, 07374 Seoul (KR); HWANG, Hyung-Kwon, 03759 Seodaemun-gu, Seoul (KR)
(74) Representative: Benvenuti, Federica

(57) **Abstract**

The present invention pertains to a liquid electrolyte for lithium secondary batteries comprising:
a) at least one fluorinated acyclic diether represented by the formula (I)

R¹-O-R²-O-R³ (I)

wherein R¹ and R³ represent a fluorinated straight-chain alkyl group respectively; R² represents an optionally fluorinated straight-chain alkyl group; and the sum of carbon atoms in R¹, R², and R³ is from 3 to 10, preferably from 5 to 8, and more preferably 6;
b) at least one fluorinated acyclic compound selected from the group consisting of a fluorinated acyclic carboxylic acid ester represented by the formula (II), a fluorinated acyclic carbonate represented by the formula (III), and a mixture thereof

R⁴-COO-R⁵ (II)

R⁶-OC(O)O-R⁷ (III)

wherein R⁴, R⁵, R⁶, and R⁷ represent an alkyl group respectively; the sum of carbon atoms in any of R⁴ and R⁵, and R⁶ and R⁷ is from 2 to 7; and at least one hydrogen in R⁴ and/or R⁵, and R⁶ and/or R⁷ is replaced by fluorine;
c) at least one organic carbonate; and
d) at least one lithium salt,
with a provision that b) and c) are different.

The present invention also relates to a lithium secondary battery comprising an anode, a cathode, a separator and a liquid electrolyte according to the present invention.

## Description

### TECHNICAL FIELD

The present invention pertains to a liquid electrolyte for lithium secondary batteries comprising:
a) at least one fluorinated acyclic diether represented by the formula (I)

   R¹-O-R²-O-R³ (I)

   wherein R¹ and R³ represent a fluorinated straight-chain alkyl group respectively; R² represents an optionally fluorinated straight-chain alkyl group; and the sum of carbon atoms in R¹, R², and R³ is from 3 to 10, preferably from 5 to 8, and more preferably 6;
b) at least one fluorinated acyclic compound selected from the group consisting of a fluorinated acyclic carboxylic acid ester represented by the formula (II), a fluorinated acyclic carbonate represented by the formula (III), and a mixture thereof

   R⁴-COO-R⁵ (II)

   R⁶-OC(O)O-R⁷ (III)

   wherein R⁴, R⁵, R⁶, and R⁷ represent an alkyl group respectively; the sum of carbon atoms in any of R⁴ and R⁵, and R⁶ and R⁷ is from 2 to 7; and at least one hydrogen in R⁴ and/or R⁵, and R⁶ and/or R⁷ is replaced by fluorine;
c) at least one organic carbonate; and
d) at least one lithium salt
   with a provision that b) and c) are different.

The present invention also relates to a lithium secondary battery comprising an anode, a cathode, a separator and a liquid electrolyte according to the present invention.

### BACKGROUND OF THE INVENTION

For more than two decades, lithium secondary batteries including lithium-ion batteries have retained a dominant position in the market of rechargeable energy storage devices due to their many benefits comprising light-weight, reasonable energy density, and good cycle life. Nevertheless, current lithium secondary batteries still suffer from relatively low energy densities with respect to the required energy density, which keeps increasing for high power applications such as electrical vehicles (EVs), hybrid electrical vehicles (HEVs), grid energy storage, etc.

At the cut-off voltage higher than about 4.2 V, the electrolyte system is often deteriorated because the components of the electrolyte, such as a solvent, a conducting salt, and an additive, especially a film-forming additive which is believed to form a protective layer (often called "solid electrolyte interphase (SEI)") on a surface of the electrode(s) on initial charging, cannot endure such high voltage. On the contrary, the battery which can be operated at higher voltage (up to 5.0 V) is desired in the art, and accordingly the developments of electrolyte suitable for the high-voltage batteries, and/or the component for such an electrolyte have been consistently required in the art. In terms of the charge cut-off voltage, such high-voltage batteries have a charge cut-off voltage of higher than 4.2 V, in particular at least 4.35 V.

As electrolyte solvents for lithium secondary batteries, organic carbonates have been conventionally used comprising acyclic carbonates, such as ethyl methyl carbonate, dimethyl carbonate or diethyl carbonate, and cyclic carbonates, such as ethylene carbonate or propylene carbonate. However, these organic carbonates can easily decompose above 4.35V and there are also safety concerns with the use of organic carbonates because of their relatively low boiling point and high flammability, which may result in a degradation of battery performance.

Accordingly, various approaches have been investigated to overcome the limitations of commonly used liquid electrolytes based on the organic carbonates, to increase the energy density, notably at higher voltage, to improve the cycle performance at elevated temperature, and to reduce the swelling of the batteries, while ensuring high safety.

As one of the diverse research efforts with such purposes, a particular solvent mixture for use as a liquid electrolyte in lithium secondary batteries, which comprises ethylene carbonate and a fluorine-containing carboxylic acid ester in certain concentrations, was reported in WO 2013/033579 (E.I.DUPONT DE NEMOURS AND COMPANY), to contribute to the improved cycling performance at high temperature, particularly with a high voltage cathode.

Besides, there have been several approaches with the same purpose, consisting of using particular hydrofluoroethers as an essential component of the electrolyte for lithium ion batteries. For instance, US 5,916,708 (HOESHST AKTIENGESELLSHAFT) discloses particular hydrofluoroethers represented by the formulae (i) and/or (ii),

RO-[CH₂]ₘO]ₙ-CF₂-CFHX (i)

X-CFH-CF₂O-[(CH₂)ₘO]ₙ-CF₂-CFH-X (ii)

wherein R is a straight-chain alkyl group having from 1 to 10 carbon atoms or a branched alkyl group having from 3 to 10 carbon atoms; X is fluorine, chlorine or a perfluoroalkyl group having from 1 to 6 carbon atoms, which may also contain ethereal oxygen; m is an integer from 2 to 6, and n is an integer from 1 to 8.

WO 2015/078791 (Solvay Specialty Polymers Italy S.p.A) discloses that the liquid electrolyte comprising certain hydrofluoroethers having a high fluorination rate, which are obtainable with the process disclosed in the WO 2012/084745A (Solvay Specialty Polymers Italy S.p.A), exhibit favorable properties in terms of solubility of a lithium salt, working temperature range, ionic conductivity, oxidative stability at high voltage and low flammability.

Despite the efforts in this field as briefly described above, there still exists the outstanding needs for a liquid electrolyte for lithium secondary batteries having improved cycling performance at high temperature, particularly with a high voltage cathode.

### SUMMARY OF THE INVENTION

The present invention pertains to a liquid electrolyte for lithium secondary batteries comprising:
a) at least one fluorinated acyclic diether represented by the formula (I)

   R¹-O-R²-O-R³ (I)

   wherein R¹ and R³ represent a fluorinated straight-chain alkyl group respectively; R² represents an optionally fluorinated straight-chain alkyl group; and the sum of carbon atoms in R¹, R², and R³ is from 3 to 10, preferasbly from 5 to 8, and more preferably 6;
b) at least one fluorinated acyclic compound selected from the group consisting of a fluorinated acyclic carboxylic acid ester represented by the formula (II), a fluorinated acyclic carbonate represented by the formula (III), and a mixture thereof

   R⁴-COO-R⁵ (II)

   R⁶-OC(O)O-R⁷ (III)

   wherein R⁴, R⁵, R⁶, and R⁷ represent an alkyl group respectively; the sum of carbon atoms in any of R⁴ and R⁵, and R⁶ and R⁷ is from 2 to 7; and at least one hydrogen in R⁴ and/or R⁵, and R⁶ and/or R⁷ is replaced by fluorine;
c) at least one organic carbonate; and
d) at least one lithium salt
with a provision that b) and c) are different.

It was surprisingly found by the inventors that the above-mentioned technical problems can be solved by using a liquid electrolyte according to the present invention, which is clearly evidenced by the excellent capacity retention and Coulombic efficiency.

### DETAILED DESCRIPTION OF THE INVENTION

### DEFINITIONS

Throughout this specification, unless the context requires otherwise, the word "comprise" or "include", or variations such as "comprises", "comprising", "includes", including" will be understood to imply the inclusion of a stated element or method step or group of elements or method steps, but not the exclusion of any other element or method step or group of elements or method steps. According to preferred embodiments, the word "comprise" and "include", and their variations mean "consist exclusively of'.

As used in this specification, the singular forms "a", "an" and "the" include plural aspects unless the context clearly dictates otherwise. The term "and/or" includes the meanings "and", "or" and also all the other possible combinations of the elements connected to this term.

The term "between" should be understood as being inclusive of the limits.

The term "aliphatic group" includes organic moieties characterized by straight or branched-chains, typically having between 1 and 18 carbon atoms. In complex structures, the chains may be branched, bridged, or cross-linked. Aliphatic groups include alkyl groups, alkenyl groups, and alkynyl groups.

In the present invention, the term "cut-off voltage" is intended to denote a prescribed lower-limit voltage at which the discharging is considered complete. The cut-off voltage is usually chosen so that the maximum useful capacity of the battery is achieved. The cut-off voltage is different from one battery to the other and highly dependent on the type of batteries, e.g., type of cathode or anode.

As used herein, the terminology "(Cₙ-Cₘ)" in reference to an organic group, wherein n and m are integers, respectively, indicates that the group may contain from n carbon atoms to m carbon atoms per group.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a temperature range of about 120°C to about 150°C should be interpreted to include not only the explicitly recited limits of about 120°C to about 150°C, but also to include sub-ranges, such as 125°C to 145°C, 130°C to 150°C, and so forth, as well as individual amounts, including fractional amounts, within the specified ranges, such as 122.2°C, 140.6°C, and 141.3°C, for example.

Unless otherwise specified, in the context of the present invention the amount of a component in a composition is indicated as the ratio between the volume of the component and the total volume of the composition multiplied by 100, i.e., % by volume (vol%) or as the ratio between the weight of the component and the total weight of the composition multiplied by 100, i.e., % by weight (wt%).It is to be understood that both the foregoing general description and the following detailed description are exemplary and are intended to provide further explanation of the invention as claimed. Accordingly, various changes and modifications described herein will be apparent to those skilled in the art. Moreover, descriptions of well-known functions and constructions may be omitted for clarity and conciseness.

The present invention relates to a liquid electrolyte for lithium secondary batteries comprising:
a) at least one fluorinated acyclic diether represented by the formula (I)

   R¹-O-R²-O-R³ (I)

   wherein R¹ and R³ represent a fluorinated straight-chain alkyl group respectively; R² represents an optionally fluorinated straight-chain alkyl group; and the sum of carbon atoms in R¹, R², and R³ is from 3 to 10, preferably from 5 to 8, and more preferably 6;
b) at least one fluorinated acyclic compound selected from the group consisting of a fluorinated acyclic carboxylic acid ester represented by the formula (II), a fluorinated acyclic carbonate represented by the formula (III), and a mixture thereof

   R⁴-COO-R⁵ (II)

   R⁶-OC(O)O-R⁷ (III)

   wherein R⁴, R⁵, R⁶, and R⁷ represent an alkyl group respectively; the sum of carbon atoms in any of R⁴ and R⁵, and R⁶ and R⁷ is from 2 to 7; and at least one hydrogen in R⁴ and/or R⁵, and R⁶ and/or R⁷ is replaced by fluorine;
c) at least one organic carbonate; and
d) at least one lithium salt,
with a provision that b) and c) are different.

In one embodiment, R⁴, R⁵, R⁶, and R⁷ contain neither a CH₂F- group nor a -CHF-group.

In the present invention, the term "alkyl" is intended to denote saturated hydrocarbons having one or more carbon atoms, including straight-chain alkyl groups, such as methyl, ethyl, propyl, butyl, pentyl, hexyl, heptyl, octyl, nonyl, decyl, cyclic alkyl groups (or "cycloalkyl" or "alicyclic" or "carbocyclic" groups), such as cyclopropyl, cyclopentyl, cyclohexyl, cycloheptyl, and cyclooctyl, branched-chain alkyl groups, such as isopropyl, tert-butyl, sec-butyl, and isobutyl, and alkyl-substituted alkyl groups, such as alkyl-substituted cycloalkyl groups and cycloalkyl-substituted alkyl groups.

In the present invention, the term "fluorinated ayclic diether" is intended to denote an acyclic diether compound, wherein at least one hydrogen atom is replaced by fluorine. One, two, three or a higher number of hydrogen atoms may be replaced by fluorine.

In the present invention, the term "boiling point" is intended to denote the temperature at which the vapour pressure of a liquid substance equals to the pressure surrounding the liquid and the liquid changes its physical status into a vapour. The boiling point of a liquid substance varies depending on the surrounding environmental pressure and the boiling point according to the invention corresponds to the boiling point when the liquid is at atmospheric pressure, also known as the atmospheric boiling point.

In one embodiment, the boiling point of a) the fluorinated acyclic diether is at least 80°C, preferably from 80°C to 160°C, and more preferably from 120°C to 160°C.

In one embodiment, a) the fluorinated acyclic diether is in an amount of from 0.05 to 45% by weight (wt%), and preferably from 0.5 to 40 wt%, based on the total weight of the liquid electrolyte.

In another embodiment, a) the fluorinated acyclic diether is in an amount of from 10 to 45 wt%, and preferably from 20 to 40 wt%, based on the total weight of the liquid electrolyte.

In one embodiment, the molar ratio F/H in a) the fluorinated acyclic diether is from 1.3 to 13.0, preferably from 2.5 to 6.0.

In a preferred embodiment, a) the fluorinated acyclic diether contains 6 carbon atoms.

In a more preferred embodiment, a) the fluorinated acyclic diether is CHF₂CF₂-O-CH₂CH₂-O-CF₂CF₂H.

Non-limitative examples of suitable a) fluorinated acyclic diether according to the present invention include, notably, the followings:
CF₃CH₂-O-CF₂CHF-O-CF₃, CHF₂CH₂-O-CF₂CF₂-O-CF₃, CF₃CF₂-O-CHFCHF-O-CHF₂, CHF₂CF₂-O-CHFCHF-O-CF₃, CF₃CHF-O-CHFCF₂-O-CHF₂, CF₃CHF-O-CF₂CHF-O-CHF₂, CH₃CF₂-O-CF₂-O-CF₂CF₃, CFH₂CHF-O-CF₂-O-CF₂CF₃, CF₃CF₂-O-CHF-O-CHFCHF₂, CF₃CF₂-O-CHF-O-CHFCHF₂, CF₃CH₂-O-CF₂CF₂-O-CF₃, CHF₂CHF-O-CF₂CF₂-O-CF₃, CH₂FCF₂-O-CF₂CF₂-O-CF₃, CF₃CF₂-O-CHFCHF-O-CF₃, CF₃CF₂-O-CF₂CH₂-O-CF₃, CF₃CF₂-O-CH₂CF₂-O-CF₃, CF₃CF₂-O-CF₂CFH-O-CHF₂, CF₃CHF-O-CHFCF₂-O-CF₃, CF₃CHF-O-CF₂CHF-O-CF₃, CHF₂CF₂-O-CF₂CHF-O-CF₃, CHF₂CF₂-O-CHFCF₂-O-CF₃, CHF₂CF₂-O-CF₂CF₂-O-CHF₂, CF₃CHF-O-CF₂CF₂-O-CHF₂, CF₃CF₂-O-CF₂-O-CHFCF₃, CF₂HCF₂-O-CF₂-O-CF₂CF₃, CF₃CHF-O-CF₂-O-CF₂CF₃, CF₃CF₂-O-CHF-O-CF₂CF₃, CF₃CF₂-O-CF₂-O-CF₂CHF₂, CF₂HCF₂-O-CF₂CH₂-O-CF₂CF₂H, CF₃CF₂-O-CH₂CH₂-O-CF₂CF₃, CF₂HCF₂-O-CHFCHF-O-CF₂CF₂H, CF₃CF₂-O-CHFCH₂-O-CF₂CF₂H, CF₂HCF₂-O-CHFCHF-O-CF₂CF₂H, CF₃CF₂-O-CH₂CHF-O-CF₂CF₂H, CF₃-O-CHFCF₂CH₂-O-CF₂CF₂H, CF₂HCF₂-O-CF₂CF₂-O-CF₂CF₂H, CF₃CF₂-O-CF₂CHF-O-CF₂CF₂H, CF₃CF₂-O-CHFCF₂-O-CF₂CF₂H, CF₃CF₂-O-CF₂CH₂-O-CF₂CF₃, CF₃CF₂-O-CHFCHF-O-CF₂CF₃, CF₃CF₂-O-CHFCHF-O-CF₂CF₃, and mixtures thereof.

In another embodiment, a) the fluorinated acycic diether contains 7 carbon atoms.

In another embodiment, a) the fluorinated acyclic diether contains 8 carbon atoms.

In one embodiment, the liquid electrolyte according to the present invention comprises neither a non-fluorinated ether nor a fluorinated mono-ether.

In the present invention, the term "non-fluorinated ether" is intended to denote an ether compound, wherein no fluorine atom is present.

In the present invention, the term "fluorinated mono-ether" is intended to denote a mono-ether compound, wherein at least one hydrogen atom is replaced by fluorine. One, two, three or a higher number of hydrogen atoms may be replaced by fluorine.

In the present invention, b) the fluorinated acyclic compound is selected from the group consisting of a fluorinated acyclic carboxylic acid ester represented by the formula (II), a fluorinated acyclic carbonate represented by the formula (III), and mixtures thereof

R⁴-COO-R⁵ (II)

R⁶-OC(O)O-R⁷ (III)

wherein R⁴, R⁵, R⁶, and R⁷ represent an alkyl group respectively; the sum of carbon atoms in any of R⁴ and R⁵, and R⁶ and R⁷ are from 2 to 7; and at least one hydrogen in R⁴ and/or R⁵, and R⁶ and/or R⁷ is replaced by fluorine.

In one embodiment, R⁴, R⁵, R⁶, and R⁷ contain neither a CH₂F- group nor a -CHF-group.

In a particular embodiment, R⁶ and R⁷ contain neither a CH₂F- group nor a -CHF-group.

In one embodiment, the number of carbon atoms in R⁴ in the formula (II) is 1, 3, 4, or 5. In a preferred embodiment, the number of carbon atoms in R⁴ in the formula (II) is 1.

In a particular embodiment, R⁴ and R⁶ in the formula (II) and (III) do not contain fluorine, and R⁵ and R⁷ contain fluorine.

In another particular embodiment, R⁶ and R⁷ independently represent a straight-chain or branched alkyl group having from 2 to 7 carbon atoms, where at least two hydrogens are replaced by fluorines (that is, at least two hydrogens in R⁶ are replaced by fluorines, or at least two hydrogens in R⁷ are replaced by fluorines, or at least two hydrogens in R⁶ and at least two hydrogens in R⁷ are replaced by fluorines).

In one embodiment, b) the fluorinated acyclic compound is a fluorinated acyclic carboxylic acid ester. Non-limitative examples of suitable fluorinated acyclic carboxylic acid ester according to the present invention include, notably, the followings:
CH₃-COO-CH₂CF₂H, CF₂HCH₂-COO-CH₃, CF₂H-COO-CH₃, CF₃-COO-CH₂CF₃, CF₃CF₂-COO-CH₃, CF₃CHF-COO-CH₃, CH₃-COO-CH₂CF₃, CF₃-COO-CH₂CF₂CF₂H, CF₃-COO-CH₃, CF₃CF₂CF₂-COO-CH₃, CF₃-COO-CH(CH₃)₂, CF₂H-COO-CH₂CH₃, CF₃-COO-CH₂CH₃, CH₃CF₂-COO-CH₂CH₃, CH₃-COO-CH(CF₃)CH₃, CF₂HCH₂-COO-CH₂CH₃, CH₃-COO-CH₂CH₂CF₂H, CH₃-COO-CH₂CF₂CF₂H, CH₃CH₂-COO-CH₂CH₂CF₂H, CF₂HCH₂CH₂-COO-CH₂CH₃, CF₂H-COO-CH₂CF₂H, CF₂HCF₂-COO-CH₃, CF₂HCF₂CF₂CF₂-COO-CH₃, CF₃CH₂-COO-CH₃, CH₃CH₂-COO-CH₂CF₂H, CF₃CH₂-COO-CH₂CH₂CH₃, CH₃-COO-CH₂CH₂CH₂CF₂CF₃, CF₂HCH₂-COO-CH(CH₃)₂, CF₂H-COO-CH₂CH₂CH₃, CF₂H-COO-CH(CH₃)₂, CH₃-COO-CH₂CF₂H, CH₃-COO-CH₂CF₃, CH₃CH₂-COO-CH₂CF₂H, CH₃CH₂-COO-CH₂CF₃, and mixtures thereof.

In a preferred embodiment, b) the fluorinated acyclic compound is a fluorinated acyclic carboxylic acid ester comprising CH₃-COO-CH₂CF₂H, CF₂HCH₂-COO-CH₃, CF₂HCH₂-COO-CH₂CH₃, CH₃-COO-CH₂CH₂CF₂H, CH₃CH₂-COO-CH₂CH₂CF₂H, CF₂HCH₂CH₂-COO-CH₂CH₃, CH₃-COO-CH₂CF₃, CH₃CH₂-COO-CH₂CF₂H, CH₃CH₂-COO-CH₂CF₃, CH₃CH₂-COO-CH₂CF₂H, CF₂H-COO-CH₃, CF₂H-COO-CH₂CH₃, CF₃-COO-CH₂CH₃, CH₃-COO-CH(CH₃)CH₃, or mixtures thereof.

In a more preferred embodiment, b) the fluorinated acyclic compound is CF₂HCH₂-COO-CH₃ (2,2-difluoroethyl acetate).

In another embodiment, b) the fluorinated acyclic compound is a fluorinated acyclic carbonate. Non-limitative examples of suitable fluorinated acyclic carbonate according to the present invention include, notably, the followings:
CH₃-OC(O)O-CH₂CF₂H (methyl 2,2-difluoroethyl carbonate), CH₃-OC(O)O-CH₂CF₃ (methyl 2,2,2-trifluoroethyl carbonate), CH₃-OC(O)O-CH₂CF₂CF₂H (methyl 2,2,3,3-tetrafluoropropyl carbonate), CF₂HCH₂-OC(O)O-CH₂CF₃ (ethyl 2,2-difluoroethyl carbonate), CF₃CH₂-OC(O)O-CH₂CH₃ (ethyl 2,2,2-trifluoroethyl carbonate), CF₃CH₂-OC(O)O-CH₂CF₃ (bis(2,2,2-trifluoroethyl) carbonate), CF₂HCH₂-OC(O)O-CH₂CF₂H (bis(2,2-difluoroethyl) carbonate), CH₃-OC(O)O-CH₂CF₂H (methyl 2,2-difluoroethyl carbonate), CF₃-OC(O)O-CF₃, CFH₂-OC(O)O-CH₃, CF₃CHF-OC(O)O-CF₃, CH₃CH₂-OC(O)O-CHFCH₃, CH₃CHF-OC(O)O-CHFCH₃, CH₃CHF-OC(O)O-CH₂CF₃, CH₃CHF-OC(O)O-CH₂CH₂CH₃, and mixtures thereof.

In a preferred embodiment, b) the fluorinated acyclic compound is a fluorinated acyclic carbonate comprising CH₃-OC(O)O-CH₂CF₂H (methyl 2,2-difluoroethyl carbonate), CH₃-OC(O)O-CH₂CF₃ (methyl 2,2,2-trifluoroethyl carbonate), CH₃-OC(O)O-CH₂CF₂CF₂H (methyl 2,2,3,3-tetrafluoropropyl carbonate), CF₂HCH₂-OC(O)O-CH₂CF₃ (ethyl 2,2-difluoroethyl carbonate), CF₃CH₂-OC(O)O-CH₂CH₃ (ethyl 2,2,2-trifluoroethyl carbonate), or mixtures thereof.

In a more preferred embodiment, b) the fluorinated acyclic compound is CH₃-OC(O)O-CH₂CF₃ (methyl 2,2,2-trifluoroethyl carbonate).

A mixture of two or more of these fluorinated acyclic carboxylic acid ester and/or fluorinated acycic carbonate may also be used as b) the fluorinated acyclic compound. A non-limitative example is a mixture of 2,2-difluoroethyl acetate and 2,2-difluoroethyl propionate, or a mixture of 2,2-difluoroethyl acetate and ethyl 2,2,2-difluoroethyl carbonate.

In one embodiment, b) the fluorinated acyclic compound is in an amount of from 10 to 50 wt%, and preferably from 20 to 45 wt%, based on the total weight of the liquid electrolyte.

The liquid electrolyte according to the present invention does not comprise a fluorinated cyclic carboxylic acid ester, e.g., a fluorinated lactone containing a 1-oxacycloalkan-2-one structure.

In one embodiment, c) the organic carbonate comprises a fluorinated cylic carbonate, a non-fluorinated cyclic carbonate and a non-fluorinated acyclic carbonate. Non-limitative examples of c) the organic carbonate according to the present invention include, notably, the followings:
4-fluoroethylene carbonate, 4,5-difluoro-1,3-dioxolan-2-one, 4,5-difluoro-4-methyl-1,3-dioxolan-2-one, 4,5-difluoro-4,5-dimethyl-1,3-dioxolan-2-one, 4,4-difluoro-1,3-dioxolan-2-one, 4,4,5-trifluoro-1,3-dioxolan-2-one, 4-fluoromethyl-1,3-dioxolan-2-one, tetrafluoroethylene carbonate, 4-(2,2-difluoroethoxy)ethylene carbonate, 4-(2,2,2-trifluoroethoxy)ethylene carbonate, ethylene carbonate, propylene carbonate, butylene carbonate, trimethylene carbonate, vinylene carbonate, vinyl ethylene carbonate, dimethylvinylene carbonate, ethyl propyl carbonate, cyclohexene carbonate, bisphenol A, B and F carbonate, dimethyl carbonate, ethyl methyl carbonate, diethyl carbonate, and mixtures thereof.

In one embodiment, the total amount of c) the at least one organic carbonate is from 10 to 80 wt%, and preferably from 15 to 60 wt%, with respect to the total weight of the liquid electrolyte.

In a particular embodiment, c) the organic carbonate comprises a fluorinated cyclic carbonate in an amount of from 1 to 15 wt%, preferably from 2 to 12 wt%, and more preferabl from 5 to 10 wt%, based on the total weight of the liquid electrolyte.

Non-limitative examples of d) the lithium salt according to the present invention include, notably, the followings:
a lithium ion complex such as lithium hexafluorophosphate (LiPF₆), lithium perchlorate (LiClO₄), lithium hexafluoroarsenate (LiAsF₆), lithium hexafluoroantimonate (LiSbF₆), lithium hexafluorotantalate (LiTaF₆), lithium tetrachloroaluminate (LiAlCl₄), lithium tetrafluoroborate (LiBF₄), lithium chloroborate (Li₂B₁₀Cl₁₀), lithium fluoroborate (Li₂B₁₀F₁₀), Li₂B₁₂FₓH₁₂₋ₓ wherein x=0-12, LiPFₓ(R_{F})₆₋ₓ and LiBF_{y}(R_{F})_{4-y} wherein R_{F} represents perfluorinated C₁-C₂₀ alkyl groups or perfluorinated aromatic groups, x=0-5 and y=0-3, LiBF₂[O₂C(CX₂)ₙCO₂], LiPF₂[O₂C(CX₂)ₙCO₂]₂, LiPF₄[O₂C(CX₂)ₙCO₂] wherein X is selected from the group consisting of H, F, Cl, C₁-C₄ alkyl groups and fluorinated alkyl groups, and n=0-4, lithium trifluoromethane sulfonate (LiCF₃SO₃), lithium bis(fluorosulfonyl)imide Li(FSO₂)₂N (LiFSI), LiN(SO₂CₘF₂ₘ₊₁)(SO₂CₙF₂ₙ₊₁) and LiC(SO₂CₖF₂ₖ₊₁)(SO₂CₘF₂ₘ₊₁)(SO₂CₙF₂ₙ₊₁) wherein k=1-10, m=1-10 and n=1-10, LiN(SO₂CₚF₂ₚSO₂) and LiC(SO₂CₚF₂ₚSO₂)(SO₂C_{q}F_{2q+1}) wherein p=1-10 and q=1-10, and mixtures thereof.

In one embodiment, d) the lithium salt is lithium bis(trifluorosulfonyl)imid (LiN(CF₃SO₂)₂; LiTFSI).

In another embodiment, d) the lithium salt is LiPF₆.

In another embodiment, d) the lithium salt is LiFSI.

In one embodiment, a molar concentration (M) of the lithium salt in the liquid electrolyte according to the present invention is from 1 M to 8 M, preferably from 1 M to 4 M, and more preferably from 1 M to 2 M.

The lithium salt according to the present invention does not comprise lithium salts having nitrogen atoms on a heterocyclic ring such as an imidazole, e.g., lithium 2-trifluoromethyl-4,5-dicyanoimidazole (LiTDI).

According to one embodiment, the liquid electrolyte according to the present invention further comprises e) at least one film-forming additive, which promotes the formation of the solid electrolyte interface (SEI) layer at the negative electrode surface by reacting in advance of the solvents on the electrode surfaces. For the SEI layer, the main components hence comprise the decomposed products of electrolyte solvents and salts, which may include Li₂CO₃ (in case of LiCoO₂ as a positive electrode), lithium alkyl carbonate, lithium alkyl oxide and other salt moieties such as LiF for LiPF₆-based electrolytes. According to another embodiment, e) the film-forming additive stabilizes the cathode electrolyte interface (CEI) layer at the positive electrode surface by preventing the structural change of the positive electrode, notably under high voltage. Usually, the reduction potential of the film-forming additive is higher than that of the solvent when a reaction occurs at the negative electrode surface, and the oxidation potential of the film-forming additive is lower than that of the solvent when the reaction occurs at the positive electrode side.

In one embodiment, e) the film-forming additive according to the present invention is selected from the group consisting of sulfur compounds comprising 1,3,2-dioxathiolane-2,2-dioxide, 1,3,2-dioxathiolane-4-ethynyl-2,2-dioxide, 1,3,2-dioxathiolane-4-ethenyl-2,2-dioxide, 1,3,2-dioxathiolane-4,5-diethenyl-2,2-dioxide, 1,3,2-dioxathiolane-4-methyl-2,2-dioxide, 1,3,2-dioxathiolane-4,5-dimethyl-2,2-dioxide, 1,3,2-dioxathiane-2,2-dioxide, 1,3,2-dioxathiane-4-ethynyl-2,2-dioxide, 1,3,2-dioxathiane-5-ethynyl-2,2-dioxide, 1,3,2-dioxathiane-4-ethenyl-2,2-dioxide, 1,3,2-dioxathiane-5-ethenyl-2,2-dioxide, 1,3,2-dioxathiane-4,5-diethenyl-2,2-dioxide, 1,3,2-dioxathiane-4,6-diethenyl-2,2-dioxide, 1,3,2-dioxathiane-4,5,6-triethenyl-2,2-dioxide, 1,3,2-dioxathiane-4-methyl-2,2-dioxide, 1,3,2-dioxathiane-5-methyl-2,2-dioxide, 1,3,2-dioxathiane-4,5-dimethyl-2,2-dioxide, dioxathiane-4,6-dimethyl-2,2-dioxide, dioxathiane-4,5,6-trimethyl-2,2-dioxide; 1,3-propane sultone, 3-fluoro-1,3-propane sultone, 4-fluoro-1,3-propane sultone, 5-fluoro-1,3-propane sultone, 1,4-butane sultone, 3-fluoro-1,4-butane sultone, 4-fluoro-1,4-butane sultone, 5-fluoro-1,4-butane sultone, 6-fluoro-1,4-butane sultone, preferably 1,3,2-dioxathiolane-2,2-dioxide, 1,3,2-dioxathiane-2,2-dioxide, oxathiolane-2,2-dioxide (1,3-propane sultone), 1,3,2-dioxathiolane-2-oxide (ethylene sulfite) and prop-1-ene-1,3-sultone, dimethyl sulfone, tetramethylene sulfone (also known as sulfolane), ethyl methyl sulfone and isopropyl methyl sulfone; nitrile derivatives comprising succinonitrile, adiponitrile, and glutaronitrile; lithium nitrate (LiNO₃); boron derivatives salt comprising lithium difluoro oxalato borate borate (LiDFOB), lithium bis(oxalato)borate (LiB(C₂O₄)₂; LiBOB), lithium fluoromalonato (difluoro)borate (LiB(O₂CCHFCO₂)₂; LiFMDFB), lithium bis(malonato)borate [LiB(O₂CCH₂CO₂)₂], lithium bis(difluoromalonato) borate [LiB(O₂CCF₂CO₂)₂], lithium (malonatooxalato) borate [LiB(C₂O₄)(O₂CCH₂CO₂)], lithium (difluoromalonatooxalato) borate [LiB(C₂O₄)(O₂CCF₂CO₂)], lithium tris(oxalato) phosphate [LiP(C₂O₄)₃], lithium tris(difluoromalonato) phosphate [LiP(O₂CCF₂CO₂)₃], lithium difluorophosphate (LiPO₂F₂), vinyl acetate, biphenyl benzene, isopropyl benzene, hexafluorobenzene, tris(trimethylsilyl)phosphate, triphenyl phosphine, ethyl diphenylphosphinite, triethyl phosphite, tris(2,2,2-trifluoroethyl) phosphite, maleic anhydride, vinylene carbonate, vinyl ethylene carbonate, cesium bis(triflulorosulfonyl)imide (CsTFSI), cesium hexafluorophosphate (CsPF₆), cesium fluoride (CsF), trimethylboroxine (TMB), tributyl borate (TBB), 2-(2,2,3,3,3-pentafluoropropoxy)-1,3,2-dioxaphospholane (PFPOEPi), 2-(2,2,3,3,3-pentafluoropropoxy)-4-(trifluormethyl)-1,3,2-dioxaphospholane (PFPOEPi-1CF₃), lithium hexafluorophosphate (LiPF₆), silver nitrate (AgNO₃), silver hexafluorophosphate (AgPF₆), tris(trimethylsilyl)phosphine (TMSP), 1,6-divinylperfluorohexane, and mixtures thereof.

In a preferred embodiment, e) the film-forming additive is selected from the group consisting of sulfur compounds comprising 1,3,2-dioxathiolane-2,2-dioxide, 1,3,2-dioxathiane-2,2-dioxide, 1,3-propanesultone , ethylene sulphite and prop-1-ene-1,3-sultone; sulfone derivatives comprising dimethyl sulfone, tetramethylene sulfone (also known as sulfolane), ethyl methyl sulfone and isopropyl methyl sulfone; nitrile derivatives comprising succinonitrile, adiponitrile, and glutaronitirle; and lithium nitrate (LiNO₃); boron derivatives salt comprising lithium difluoro oxalato borate (LiDFOB), lithium bis(oxalato)borate (LiB(C₂O₄)₂; LiBOB), lithium fluoromalonato (difluoro)borate (LiB(O₂CCHFCO₂)₂; LiFMDFB), lithium bis(malonato)borate [LiB(O₂CCH₂CO₂)₂], lithium bis(difluoromalonato) borate [LiB(O₂CCF₂CO₂)₂], lithium (malonatooxalato) borate [LiB(C₂O₄)(O₂CCH₂CO₂)], lithium (difluoromalonatooxalato) borate [LiB(C₂O₄)(O₂CCF₂CO₂)], lithium tris(oxalato) phosphate [LiP(C₂O₄)₃], lithium tris(difluoromalonato) phosphate [LiP(O₂CCF₂CO₂)₃], lithium difluorophosphate (LiPO₂F₂), vinyl acetate, biphenyl benzene, isopropyl benzene, hexafluorobenzene, tris(trimethylsilyl)phosphate, triphenyl phosphine, ethyl diphenylphosphinite, triethyl phosphite, tris(2,2,2-trifluoroethyl) phosphite, maleic anhydride, cesium bis(triflulorosulfonyl)imide (CsTFSI), cesium fluoride (CsF), and mixtures thereof.

In a more preferred embodiment, the e) film-forming additive according to the present invention is LiBOB.

In another more preferred embodiment, the e) film-forming additive according to the present invention is maleic anhydride.

In another more preferred embodiment, the e) film-forming additive according to the present invention is a mixture of maleic anhydride and LiBOB.

In another embodiment, e) the film-forming additive according to the present invention is an ionic liquid.

The term "ionic liquid" as used herein refers to a compound comprising a positively charged cation and a negatively charged anion, which is in the liquid state at the temperature of 100°C or less under atmospheric pressure. While ordinary liquids such as water are predominantly made of electrically neutral molecules, ionic liquids are largely made of ions and short-lived ion pairs. As used herein, the term "ionic liquid" indicates a compound free from solvent.

The term "onium cation" as used herein refers to a positively charged ion having at least part of its charge localized on at least one non-metal atom such as O, N, S, or P.

In the present invention, the ionic liquid has a general formula of Aⁿ⁻Q^{l+}_{(n/l)}, wherein
- Aⁿ⁻ represents an anion;
- Q^{l+}_{(n/l)} represents a cation;
- n and 1, independently selected between 1 and 5, represent respectively the charges of the anion Aⁿ⁻ and of the cation Q^{l+}_{(n/l)}.

The cation(s) may be selected, independently of one another, from metal cations and organic cations. The cation(s) may be mono-charged cations or polycharged cations.

As metal cation, mention may preferably be made of alkali metal cations, alkaline-earth metal cations and cations of d-block elements.

In the present invention, Q^{l+}_{(n/l)} may represent an onium cation. Onium cations are cations formed by the elements of Groups VB and VIB (as defined by the old European IUPAC system according to the Periodic Table of the Elements) with three or four hydrocarbon chains. The Group VB comprises the N, P, As, Sb and Bi atoms. The Group VIB comprises the O, S, Se, Te and Po atoms. The onium cation can in particular be a cation formed by an atom selected from the group consisting of N, P, O and S, more preferably N and P, with three or four hydrocarbon chains.

The onium cation Q^{l+}_{(n/l)} can be selected from:
- heterocyclic onium cations; in particular those selected from the group consisting of: 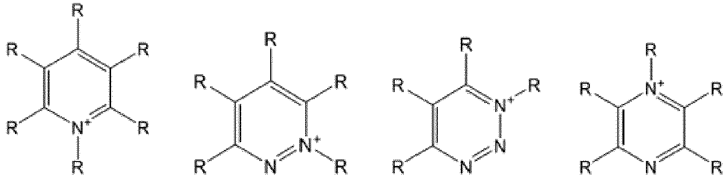 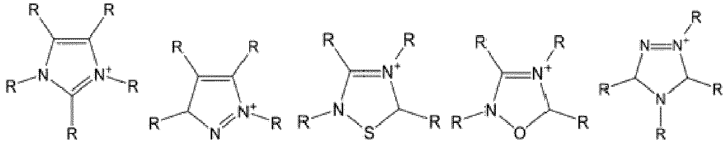
- unsaturated cyclic onium cations; in particular those selected from the group consisting of: 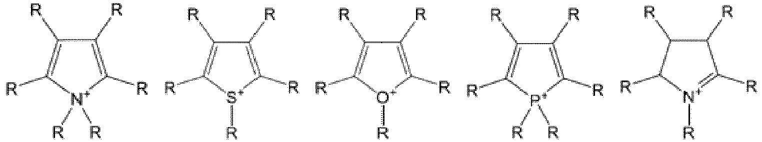
- saturated cyclic onium cations; in particular those selected from the group consisting of: 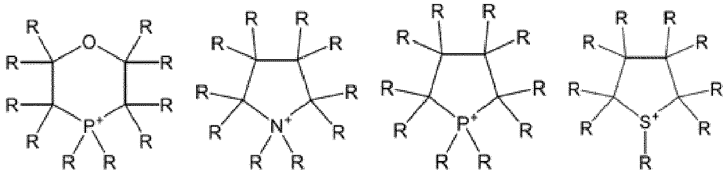 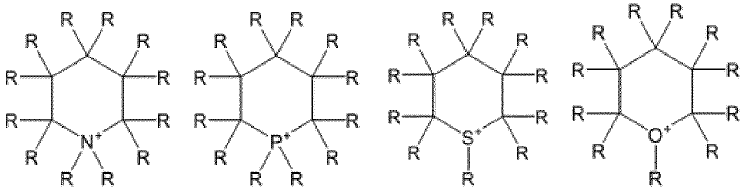 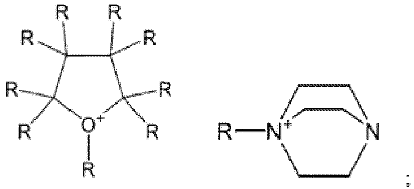 and
- non-cyclic onium cations; in particular those of general formula ⁺L-R'ₛ, in which L represents an atom selected from the group consisting of N, P, O and S, more preferably N and P, s represents the number of R' groups selected from 2, 3 or 4 according to the valence of the element L, each R' independently represents a hydrogen atom or a C₁ to C₈ alkyl group, and the bond between L⁺ and R' can be a single bond or a double bond.

In the above formulas, each "R" symbol represents, independently of one another, a hydrogen atom or an organic group. Preferably, each "R" symbol can represent, in the above formulas, independently of one another, a hydrogen atom or a saturated or unsaturated and straight-chain, branched or cyclic C₁ to C₁₈ hydrocarbon group optionally substituted one or more times by a halogen atom, an amino group, an imino group, an amide group, an ether group, an ester group, a hydroxyl group, a carboxyl group, a carbamoyl group, a cyano group, a sulfone group or a sulfite group.

The cation Q¹⁺_{(n/l)} can more particularly be selected from ammonium, phosphonium, pyridinium, pyrrolidinium, pyrazolinium, imidazolium, arsenium, quaternary phosphonium and quaternary ammonium cations.

The quaternary phosphonium or quaternary ammonium cations can more preferably be selected from tetraalkyl ammonium or tetraalkylphosphonium cations, trialkylbenzylammonium or trialkylbenzylphosphonium cations or tetraarylammonium or tetraarylphosphonium cations, the alkyl groups of which, either identical or different, represents a straight-chain or branched alkyl chain having from 4 to 12 carbon atoms, preferably from 4 to 6 carbon atoms, and the aryl groups of which, either identical or different, represents a phenyl or naphthyl group.

In a specific embodiment, Q¹⁺_{(n/l)} represents a quaternary phosphonium or quaternary ammonium cation.

In one preferred embodiment, Q¹⁺_{(n/l)} represents a quaternary phosphonium cation. Non-limiting examples of the quaternary phosphonium cation comprise trihexyl(tetradecyl)phosphonium, and a tetraalkylphosphonium cation, particularly the tetrabutylphosphonium (PBu₄) cation.

In another embodiment, Q¹⁺_{(n/l)} represents an imidazolium cation. Non-limiting examples of the imidazolium cation comprise 1,3-dimethylimidazolium, 1-(4-sulfobutyl)-3-methyl imidazolium, 1-allyl-3H-imidazolium, 1-butyl-3-methylimidazolium, 1-ethyl-3-methylimidazolium, 1-hexyl-3-methylimidazolium, 1-octyl-3-methylimidazolium

In another embodiment, Q¹⁺_{(n/l)} represents a quaternary ammonium cation which is selected in particular from the group consisting of tetraethylammonium, tetrapropylammonium, tetrabutylammonium, trimethylbenzylammonium, methyltributylammonium, N,N-diethyl-N-methyl-N-(2-methoxyethyl) ammonium, N,N-dimethyl-N-ethyl-N-(3-methoxypropyl) ammonium, N,N-dimethyl-N-ethyl-N-benzyl ammonium, N, N-dimethyl-N-ethyl-N-phenylethyl ammonium, N-tributyl-N-methyl ammonium, N-trimethyl-N-butyl ammonium, N-trimethyl-N-hexyl ammonium, N-trimethyl-N-propyl ammonium, and Aliquat 336 (mixture of methyltri(C₈ to C₁₀ alkyl)ammonium compounds).

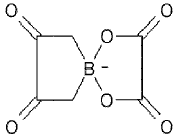

In one embodiment, Q¹⁺_{(n/l)} represents a piperidinium cation, in particular N-butyl-N-methyl piperidinium, N-propyl-N-methyl piperidinium.

In another embodiment, Q¹⁺_{(n/l)} represents a pyridinium cation, in particular N-methylpyridinium.

In a more preferred embodiment, Q¹⁺_{(n/l)} represents a pyrrolidinium cation. Among specific pyrrolidinium cations, mention may be made of the following : C₁₋₁₂alkyl-C₁₋₁₂alkyl-pyrrolidinium, and more preferably C₁₋₄alkyl-C₁₋₄alkyl-pyrrolidinium. Examples of pyrrolidinium cations comprise, but not limited to, N,N-dimethylpyrrolidinium, N-ethyl-N-methylpyrrolidinium, N-isopropyl-N-methylpyrrolidinium, N-methyl-N-propylpyrrolidinium, N-butyl-N-methylpyrrolidinium, N-octyl-N-methylpyrrolidinium, N-benzyl-N-methylpyrrolidinium, N-cyclohexylmethyl-N-methylpyrrolidinium, N-[(2-hydroxy)ethyl]-N-methylpyrrolidinium. More preferred are N-methyl-N-propylpyrrolidinium (PYR13) and N-butyl-N-methylpyrrolidinium (PYR14).

Non-limiting examples of an anion of the ionic liquid comprise iodide, bromide, chloride, hydrogen sulfate, dicyanamide, acetate, diethyl phosphate, methyl phosphonate, fluorinated anion, e.g., hexafluorophosphate (PF₆⁻) and tetrafluoroborate (BF₄⁻), and oxalatooborate of the following formula:.

In one embodiment, Aⁿ⁻ is a fluorinated anion. Among the fluorinated anions that can be used in the present invention, fluorinated sulfonimide anions may be particularly advantageous. The organic anion may, in particular, be selected from the anions having the following general formula:

(Eₐ-SO₂)N⁻R

in which:
- Eₐ represents a fluorine atom or a group having preferably from 1 to 10 carbon atoms, selected from fluoroalkyls, perfluoroalkyls and fluoroalkenyls, and
- R represents a substituent.

Preferably, Eₐ may represent F or CF₃.

According to a first embodiment, R represents a hydrogen atom.

According to a second embodiment, R represents a straight-chain or branched, cyclic or non-cyclic hydrocarbon-based group, preferably having from 1 to 10 carbon atoms, which can optionally bear one or more unsaturations, and which is optionally substituted one or more times with a halogen atom, a nitrile function, or an alkyl group optionally substituted one of several times by a halogen atom. Moreover, R may represent a nitrile group -CN.

According to a third embodiment, R represents a sulfinate group. In particular, R may represent the group -SO₂-Eₐ, Eₐ being as defined above. In this case, the fluorinated anion may be symmetrical, i.e. such that the two Eₐ groups of the anion are identical, or non-symmetrical, i.e. such that the two Eₐ groups of the anion are different.

Moreover, R may represent the group -SO₂-R', R' representing a straight-chain or branched, cyclic or non-cyclic hydrocarbon-based group, preferably having from 1 to 10 carbon atoms, which can optionally bear one or more unsaturations, and which is optionally substituted one or more times with a halogen atom, a nitrile function, or an alkyl group optionally substituted one of several times by a halogen atom. In particular, R' may comprise a vinyl or allyl group. Furthermore, R may represent the group -SO₂-N-R', R' being as defined above or else R' represents a sulfonate function -SO₃.

Cyclic hydrocarbon-based groups may preferably refer to a cycloalkyl group or to an aryl group. "Cycloalkyl" refers to a monocyclic hydrocarbon chain, having 3 to 8 carbon atoms. Preferred examples of cycloalkyl groups are cyclopentyl and cyclohexyl. "Aryl" refers to a monocyclic or polycyclic aromatic hydrocarbon group, having 6 to 20 carbon atoms. Preferred examples of aryl groups are phenyl and naphthyl. When a group is a polycyclic group, the rings may be condensed or attached by σ (sigma) bonds.

According to a fourth embodiment, R represents a carbonyl group. R may, in particular, be represented by the formula -CO-R', R' being as defined above.

The organic anion that can be used in the present invention may advantageously be selected from the group consisting of CF₃SO₂N⁻SO₂CF₃ (bis(trifluoromethane sulfonyl)imide anion, commonly denoted as TFSI), FSO₂N⁻SO₂F (bis(fluorosulfonyl)imide anion, commonly denoted as FSI), CF₃SO₂N⁻SO₂F, and CF₃SO₂N⁻SO₂N⁻SO₂CF₃.

In a preferred embodiment, the ionic liquid contains:
- a positively charged cation selected from the group consisting of imidazolnium, pyridinium, pyrrolidinium and piperidinium ions optionally containing one or more C₁-C₃₀ alkyl groups, and
- a negatively charged anion selected from the group consisting of halides, fluorinated anions, and borates.

Non-limiting examples of C₁-C₃₀ alkyl groups include, notably, methyl, ethyl, propyl, iso-propyl, n-butyl, isobutyl, sec-butyl, t-butyl, pentyl, isopentyl, 2,2-dimethyl-propyl, hexyl, 2,3-dimethyl-2-butyl, heptyl, 2,2-dimethyl-3-pentyl, 2-methyl-2-hexyl, octyl, 4-methyl-3-heptyl, nonyl, decyl, undecyl and dodecyl groups.

In one preferred embodiment, the film-forming additive according to the present invention is selected from the group consisting of N-methyl-N-propylpyrrolidinium bis(fluorosulfonyl) imide (PYR13FSI), N-butyl-N-methylpyrrolidinium bis(fluorosulfonyl) imide (PYR14FSI), N-methyl-N-propylpyrrolidinium bis(trifluoromethanesulfonyl) imide (PYR13TFSI), and N-butyl-N-methylpyrrolidinium bis(trifluoromethanesulfonyl) imide (PYR14TFSI).

In the present invention, the total amount of the e) film-forming additive may be from 0 to 10 wt%, preferably from 0 to 8 wt%, and more preferably from 0 to 5 wt% with respect to the total weight of the liquid electrolyte.

The total amount of e) the film-forming additive, if contained in the liquid electrolyte of the present invention, is from 0.05 to 5.0 wt%, and preferably from 0.05 to 3.0 wt%, with respect to the total weight of the liquid electrolyte.

In a more preferred embodiment, the total amount of e) the film-forming additive accounts for at least 1.0 wt% of the electrolyte composition.

In one embodiment, the liquid electrolyte for lithium secondary batteries according to the present invention comprises:
a) at least one fluorinated acyclic diether represented by the formula (I) in an amount of from 0.05 to 45 wt% with respect to the total weight of the liquid electrolyte

   R¹-O-R²-O-R³ (I)

   wherein R¹ and R³ represent a fluorinated straight-chain alkyl group respectively; R² represents an optionally fluorinated straight-chain alkyl group; and the sum of carbon atoms in R¹, R², and R³ is from 3 to 10, preferably from 5 to 8, and more preferably 6;
b) at least one fluorinated acyclic compound selected from the group consisting of a fluorinated acyclic carboxylic acid ester represented by the formula (II), a fluorinated acyclic carbonate represented by the formula (III), and a mixture thereof in an amount of from 10 to 50 wt% with respect to the total weight of the liquid electrolyte

   R⁴-COO-R⁵ (II)

   R⁶-OC(O)O-R⁷ (III)

   wherein R⁴, R⁵, R⁶, and R⁷ represent an alkyl group respectively; the sum of carbon atoms in any of R⁴ and R⁵, and R⁶ and R⁷ is from 2 to 7; at least one hydrogen in R⁴ and/or R⁵, and R⁶ and/or R⁷ is replaced by fluorine, and R⁴, R⁵, R⁶, and R⁷ contain neither a CH₂F-group nor a -CHF- group;
c) at least one organic carbonate in an amount of from 10 to 80 wt% with respect to the total weight of the liquid electrolyte; and
d) at least one lithium salt,
with a provision that b) and c) are different.

In a particular embodiment, the liquid electrolyte for lithium secondary batteries according to the present invention comprises
- CF₂HCF₂-O-CH₂CH₂-O-CF₂CF₂H as a fluorinated acyclic diether;
- CF₂HCH₂-COO-CH₃ as a fluorinated acyclic carboxylic acid ester;
- a mixture of PC and FEC as an organic carbonate;
- 1M of LiPF₆ as a lithium salt; and
- LIBOB and maleic anhydride as film-forming additives.

The present invention also provides a lithium secondary battery comprising:
- an anode;
- a cathode;
- a separator; and
- a liquid electrolyte according to the present invention.

In the present invention, the term "anode" is intended to denote, in particular, the electrode of an electrochemical cell, where oxidation occurs during discharging.

In the present invention, the term "cathode" is intended to denote, in particular, the electrode of an electrochemical cell, where reduction occurs during discharging.

In the present invention, the nature of the "current collector" depends on whether the electrode thereby provided is either a cathode or anode. Should the electrode of the invention be a cathode, the current collector typically comprises, preferably consists of at least one metal selected from the group consisting of Aluminium (Al), Nickel (Ni), Titanium (Ti), and alloys thereof, preferably Al. Should the electrode of the invention be an anode, the current collector typically comprises, preferably consists of at least one metal selected from the group consisting of Lithium (Li), Sodium (Na), Zinc (Zn), Magnesium (Mg), Copper (Cu) and alloys thereof, preferably Cu.

In the present invention, the term "areal capacity" of the electrodes, i.e., an node and a cathode, is intended to denote, in particular, the area-normalized specific capacity of the electrodes.

Selection and preparation of the electrodes, components contained therein and other possibly existing components in the batteries are known in the art, and therefore, can be suitably constructed depending on the purpose.

For instance, the electrodes of batteries, such as cathode and anode, can be formed from an electrode-forming composition comprising an active-electrode material, a binder, a solvent, and optionally one or more additives.

In the present invention, the term "electro-active material" is intended to denote an electro-active material that is able to incorporate or insert into its structure and substantially release therefrom lithium ions during the charging phase and the discharging phase of a battery. The nature of the electro-active material will depend on whether it will be used to form a cathode or an anode. The electro-active materials can thus be selected from cathode electro-active materials and anode electro-active materials.

In the case of forming a cathode for a lithium ion battery, the cathode electro-active material is not particularly limited. It may comprise a composite metal chalcogenide of formula LiMQ2, wherein M is at least one metal selected from transition metals such as Co, Ni, Fe, Mn, Cr, and V and Q is a chalcogen such as O or S. Among these, it is preferred to use a lithium-based composite metal oxide of formula LiMO₂, wherein M is the same as defined above. The lithium-based composite metal oxide, such as LiCoO₂, may comprise or consist of the layered structure. The composite metal chalcogenide, such as the lithium-based composite metal oxide, may comprise or consist of nano-structure. Preferred examples thereof may include LiCoO₂, LiNiO₂, LiNiₓCo₁₋ₓO₂ (0<x<1), and spinel-structured LiMn₂O₄. Another preferred examples thereof may include lithium-nickel-manganese-cobalt-based metal oxide of formula LiNiₓMn_{y}Co_{z}O₂ (x+y+z = 1, referred to as NMC), for instance LiNi_{0.8}Mn_{0.1}Co_{0.1}O₂, LiNi_{0.5}Mn_{0.2}Co_{0.3}O₂, LiNi_{1/3}Mn_{1/3}Co_{1/3}O₂, LiNi_{0.6}Mn_{0.2}Co_{0.2}O₂, preferably LiNi_{0.8}Mn_{0.1}Co_{0.1}O₂, and lithium-nickel-cobalt-aluminum-based metal oxide of formula LiNiₓCo_{y}Al_{z}O₂ (x+y+z = 1, referred to as NCA), for instance LiNi_{0.8}Co_{0.15}Al_{0.05}O₂.

Nonetheless, a broader range of chalcogenides may be considered, including those represented by formulae:
- LiₓMn_{1-y}M'_{y}A₂ (1)
- LiₓMn_{1-y}M'_{y}O_{2-z}Z_{z} (2)
- LiₓMn₂O_{4-z}A_{z} (3)
- LiₓMn_{2-y}M'_{y}A₄ (4)
- LiₓM_{1-y}M"_{y}A₂ (5)
- LiₓMO_{2-z}A_{z} (6)
- LiₓNi_{1-y}Co_{y}O_{2-z}A_{z} (7)
- LiₓNi_{1-y-z}Co_{y}M"_{z}Aₐ (8)
- LiₓNi_{1-y-z}Co_{y}M"_{z}O₂₋ₐZₐ (9)
- LiₓNi_{1-y-z}Mn_{y}M'_{z}Aₐ (10)
- LiₓNi_{1-y-z}Mn_{y}M'_{z}O₂₋ₐZₐ (11)
wherein:
- 0.95≤x≤1.1, 0≤y≤0.5, 0≤z≤0.5, 0≤a≤2;
- M is Ni or Co, M' is one or more elements selected from a group consisting of Al, Ni, Co, Cr, Fe, Mg, Sr, V, Sc, Y, La, Ce, Pr, Nd, Pm, Sm, Eu, Gd, Tb, Dy, Ho, Er, Tm, Yb, Lu, Ac, Th and Pa, M" is one or more elements selected from a group consisting of Al, Cr, Mn, Fe, Mg, Sr, V, Sc, Y, La, Ce, Pr, Nd, Pm, Sm, Eu, Gd, Tb, Dy, Ho, Er, Tm, Yb, Lu, Ac, Th and Pa, A is selected from the group consisting of O, F, S and P, and Z is selected from the group consisting of F, S, and P.

Another preferred examples may include lithium-nickel-manganese-based metal oxide (referred to as LNMO), for instance LiNi_{0.5}Mn_{0.5}O₂, and LiNi_{0.5}Mn_{1.5}O₄.

As an alternative, still in the case of forming a cathode for a lithium ion battery, the cathode electro-active material may comprise a lithiated or partially lithiated transition metal oxyanion-based electro-active material of formula M₁M₂(JO₄)_{f}E_{1-f}, wherein M₁ is lithium, which may be partially substituted by another alkali metal representing less than 20% of the M₁ metals, M₂ is a transition metal at the oxidation level of +2 selected from Fe, Mn, Ni or mixtures thereof, which may be partially substituted by one or more additional metals at oxidation levels between +1 and +5 and representing less than 35% of the M₂ metals, including 0, JO₄ is any oxyanion wherein J is either P, S, V, Si, Nb, Mo or a combination thereof, E is a fluoride, hydroxide or chloride anion, f is the molar fraction of the JO₄ oxyanion, generally comprised between 0.75 and 1. The M₁M₂(JO₄)_{f}E_{1-f} electro-active material as defined above is preferably phosphate-based and may have an ordered or modified olivine structure. More preferably, the cathode electro-active material has formula Li₃₋ₓM'_{y}M"_{2-y}(JO₄)₃ wherein 0≤x≤3, 0≤y≤2, M' and M" are the same or different metals, at least one of which being a transition metal, JO₄ is preferably PO₄ which may be partially substituted with another oxyanion, wherein J is either S, V, Si, Nb, Mo or a combination thereof. Still more preferably, the cathode electro-active material is a phosphate-based electro-active material of formula Li(FeₓMn₁₋ₓ)PO₄ wherein 0≤x≤1, wherein x is preferably 1 (i.e., lithium iron phosphate of formula LiFePO₄).

In a preferred embodiment, the cathode electro-active material is selected from the group consisting of LiMQ2, wherein M is at least one metal selected from Co, Ni, Fe, Mn, Cr and V and Q is O or S; LiNiₓCo₁₋ₓO₂ (0<x<1); spinel-structured LiMn₂O₄; lithium-nickel-manganese-cobalt-based metal oxide (NMC), for instance LiNi_{0.8}Mn_{0.1}Co_{0.1}O₂, LiNi_{0.6}Mn_{0.2}Co_{0.2}O₂,, lithium-nickel-cobalt-aluminum-based metal oxide (NCA), for instance LiNi_{0.8}Co_{0.15}Al_{0.05}O₂, and LiFePO_{4.}

In one embodiment, the cathode comprises lithium-nickel-manganese-cobalt-based metal oxide of formula LiNiₓMn_{y}Co_{z}O₂ (x+y+z = 1), lithium-nickel-cobalt-aluminum-based metal oxide of formula LiNiₓCo_{y}Al_{z}O₂ (x+y+z = 1), lithium-cobalt-based metal oxide, or lithium-nickel-manganese-based metal oxide (LNMO) as the cathode electro-active material.

In a preferred embodiment, the cathode comprises LiNi_{0.8}Mn_{0.1}Co_{0.1}O₂, LiNi_{0.6}Mn_{0.2}Co_{0.2}O₂, LiNi_{0.8}Co_{0.15}Al_{0.05}O₂, LiNi_{0.5}Mn_{0.5}O₂, LiNi_{0.5}Mn_{1.5}O₄, and LiCoO₂ as the cathode electro-active material.

In the case of forming an anode for a lithium ion battery, the anode electro-active material is not particularly limited and may comprise:
- graphitic carbons able to intercalate lithium, typically existing in forms such as powders, flakes, fibers or spheres (e.g., mesocarbon microbeads) hosting lithium;
- lithium metal;
- lithium alloy compositions, including notably those described in US 6203944 (3M Innovative Properties Co.) and WO 2000/03444 (Minnesota Mining & Manufacturing Co.);
- lithium titanates, generally represented by formula Li₄Ti₅O₁₂: these compounds are generally considered as "zero-strain" insertion materials, having low level of physical expansion upon taking up the mobile ions, i.e. Li⁺;
- lithium-silicon alloys, generally known as lithium silicides with high Li/Si ratios, in particular lithium silicides of formula Li_{4.4}Si;
- lithium-germanium alloys, including crystalline phases of formula Li_{4.4}Ge;
- silicon; and
- silicon-carbon composite.

In one embodiment, the anode comprises silicon or silicon-carbon composite as the anode electro-active material.

The batteries of the present invention may be lithium secondary batteries, including a lithium-ion battery, a lithium sulfur battery, and a lithium air battery, and sodium secondary batteries, such as a sodium ion battery, and a sodium sulfur battery, in particular a lithium-ion battery. In the present invention, the batteries having the high charge cut-off voltage are preferably secondary batteries, in particular secondary lithium-ion batteries.

By the term "separator", it is hereby intended to denote a monolayer or multilayer polymeric, nonwoven cellulose or ceramic material/film, which electrically and physically separates the electrodes of opposite polarities within an electrochemical device and is permeable to ions flowing between them.

In the present invention, the separator can be any porous substrate commonly used for a separator in an electrochemical device.

In one embodiment, the separator is a porous polymeric material comprising at least one material selected from the group consisting of polyester such as polyethylene terephthalate and polybutylene terephthalate, polyphenylene sulphide, polyacetal, polyamide, polycarbonate, polyimide, polyether sulfone, polyphenylene oxide, polyphenylene sulfide, polyethylene naphthalene, polyethylene oxide, polyacrylonitrile, polyolefin such as polyethylene and polypropylene, or mixtures thereof, optionally coated with inorganic nanoparticles.

Non-limitative examples of the inorganic nanoparticles comprise SiO₂, TiO₂, Al₂O₃, and ZrO₂.

In one particular embodiment, the separator is a polyester film coated with SiO₂.

In another particular embodiment, the separator is a polyester film coated with Al₂O₃.

In another particular embodiment, the separator is a porous polymeric material coated with polyvinylidene difluoride (PVDF).

Should the disclosure of any patents, patent applications, and publications that are incorporated herein by reference conflict with the description of the present application to the extent that it may render a term unclear, the present description shall take precedence.

## Claims

1. A liquid electrolyte for lithium secondary batteries comprising:
a) at least one fluorinated acyclic diether represented by the formula (I)
R¹-O-R²-O-R³ (I)
wherein R¹ and R³ represent a fluorinated straight-chain alkyl group respectively; R² represents an optionally fluorinated straight-chain alkyl group; and the sum of carbon atoms in R¹, R², and R³ is from 3 to 10, preferably from 5 to 8, and more preferably 6;
b) at least one fluorinated acyclic compound selected from the group consisting of a fluorinated acyclic carboxylic acid ester represented by the formula (II), a fluorinated acyclic carbonate represented by the formula (III), and a mixture thereof
R⁴-COO-R⁵ (II)
R⁶-OC(O)O-R⁷ (III)
wherein R⁴, R⁵, R⁶, and R⁷ represent an alkyl group respectively; the sum of carbon atoms in any of R⁴ and R⁵, and R⁶ and R⁷ is from 2 to 7; and at least one hydrogen in R⁴ and/or R⁵, and R⁶ and/or R⁷ is replaced by fluorine;
c) at least one organic carbonate; and
d) at least one lithium salt,
with a provision that b) and c) are different.

2. The liquid electrolyte for lithium secondary batteries according to claim 1, wherein R⁴, R⁵, R⁶, and R⁷ contain neither a CH₂F- group nor a -CHF- group.

3. The liquid electrolyte for lithium secondary batteries according to claim 1 or 2, wherein a) the fluorinated acyclic diether is in an amount of from 0.05 to 45.0% by weight (wt%), and preferably from 0.5 to 40.0 wt%, based on the total weight of the liquid electrolyte.

4. The liquid electrolyte for lithium secondary batteries according to any of claims 1 to 3, wherein the molar ratio F/H in a) the fluorinated acyclic diether is from 1.3 to 13.0, preferably from 2.5 to 6.0.

5. The liquid electrolyte for lithium secondary batteries according to any of claims 1 to 4, wherein a) the fluorinated acyclic diether is CF₂HCF₂-O-CH₂CH₂-O-CF₂CF₂H.

6. The liquid electrolyte for lithium secondary batteries according to any of claims 1 to 5, wherein b) the fluorinated acyclic compound is a fluorinated acyclic carboxylic acid ester comprising CH₃-COO-CH₂CF₂H, CF₂HCH₂-COO-CH₃, CF₂HCH₂-COO-CH₂CH₃, CH₃-COO-CH₂CH₂CF₂H, CH₃CH₂-COO-CH₂CH₂CF₂H, CF₂HCH₂CH₂-COO-CH₂CH₃, CH₃-COO-CH₂CF₃, CH₃CH₂-COO-CH₂CF₂H, CH₃CH₂-COO-CH₂CF₃, CH₃CH₂-COO-CH₂CF₂H, CF₂H-COO-CH₃, CF₂H-COO-CH₂CH₃, CF₃-COO-CH₂CH₃, CH₃-COO-CH(CH₃)CH₃, or mixtures thereof.

7. The liquid electrolyte for lithium secondary batteries according to any of claims 1 to 6, wherein b) the fluorinated acyclic compound is a fluorinated acyclic carbonate comprising CH₃-OC(O)O-CH₂CF₂H (methyl 2,2-difluoroethyl carbonate), CH₃-OC(O)O-CH₂CF₃ (methyl 2,2,2-trifluoroethyl carbonate), CH₃-OC(O)O-CH₂CF₂CF₂H (methyl 2,2,3,3-tetrafluoropropyl carbonate), CF₂HCH₂-OC(O)O-CH₂CF₃ (ethyl 2,2-difluoroethyl carbonate), CF₃CH₂-OC(O)O-CH₂CH₃ (ethyl 2,2,2-trifluoroethyl carbonate), or mixtures thereof.

8. The liquid electrolyte for lithium secondary batteries according to any of claims 1 to 7, wherein c) the organic carbonate comprises a fluorinated cylic carbonate, a non-fluorinated cyclic carbonate and a non-fluorinated acyclic carbonate.

9. The liquid electrolyte for lithium secondary batteries according to any of claims 1 to 8, wherein c) the organic carbonate comprises 4-fluoroethylene carbonate, 4,5-difluoro-1,3 -dioxolan-2-one, 4, 5-difluoro-4-methyl-1,3-dioxolan-2-one, 4,5-difluoro-4,5-dimethyl-1,3-dioxolan-2-one, 4,4-difluoro-1,3-dioxolan-2-one, 4,4,5-trifluoro-1,3-dioxolan-2-one, 4-fluoromethyl-1,3-dioxolan-2-one, tetrafluoroethylene carbonate, 4-(2,2-difluoroethoxy)ethylene carbonate, 4-(2,2,2-trifluoroethoxy)ethylene carbonate, ethylene carbonate, propylene carbonate, butylene carbonate, trimethylene carbonate, vinylene carbonate, vinyl ethylene carbonate, dimethylvinylene carbonate, ethyl propyl carbonate, cyclohexene carbonate, dimethyl carbonate, ethyl methyl carbonate, diethyl carbonate, or mixtures thereof.

10. The liquid electrolyte for lithium secondary batteries according to any of claims 1 to 9, wherein d) the lithium salt comprises lithium hexafluorophosphate (LiPF₆), lithium perchlorate (LiClO₄), lithium hexafluoroarsenate (LiAsF₆), lithium hexafluoroantimonate (LiSbF₆), lithium hexafluorotantalate (LiTaF₆), lithium tetrachloroaluminate (LiAlCl₄), lithium tetrafluoroborate (LiBF₄), lithium chloroborate (Li₂B₁₀Cl₁₀), lithium fluoroborate (Li₂B₁₀F₁₀), Li₂B₁₂FₓH₁₂₋ₓ wherein x=0-12, LiPFₓ(R_{F})₆₋ₓ and LiBF_{y}(R_{F})_{4-y} wherein R_{F} represents perfluorinated C₁-C₂₀ alkyl groups or perfluorinated aromatic groups, x=0-5 and y=0-3, LiBF₂[O₂C(CX₂)ₙCO₂], LiPF₂[O₂C(CX₂)ₙCO₂]₂, LiPF₄[O₂C(CX₂)ₙCO₂] wherein X is selected from the group consisting of H, F, Cl, C₁-C₄ alkyl groups and fluorinated alkyl groups, and n=0-4, lithium trifluoromethane sulfonate (LiCF₃SO₃), lithium bis(fluorosulfonyl)imide Li(FSO₂)₂N (LiFSI), LiN(SO₂CₘF₂ₘ₊₁)(SO₂CₙF₂ₙ₊₁) and LiC(SO₂CₖF₂ₖ₊₁)(SO₂CₘF₂ₘ₊₁)(SO₂CₙF₂ₙ₊₁) wherein k=1-10, m=1-10 and n=1-10, LiN(SO₂CₚF₂ₚSO₂) and LiC(SO₂CₚF₂ₚSO₂)(SO₂C_{q}F_{2q+1}) wherein p=1-10 and q=1-10, or mixtures thereof.

11. The liquid electrolyte for lithium secondary batteries according to any of claims 1 to 10, further comprising e) at least one film-forming additive in an amount of from 0.05 to 10.0 wt%, and preferably from 0.1 to 5.0 wt% with respect to the total weight of the liquid electrolyte.

12. The liquid electrolyte for lithium secondary batteries according to claim 11, wherein e) the film-forming additive is selected from the group consisting of sulfur compounds comprising 1,3,2-dioxathiolane-2,2-dioxide, 1,3,2-dioxathiane-2,2-dioxide, 1,3-propanesultone , ethylene sulphite and prop-1-ene-1,3-sultone; sulfone derivatives comprising dimethyl sulfone, tetramethylene sulfone (also known as sulfolane), ethyl methyl sulfone and isopropyl methyl sulfone; nitrile derivatives comprising succinonitrile, adiponitrile, and glutaronitirle; and lithium nitrate (LiNO₃); boron derivatives salt comprising lithium difluoro oxalato borate (LiDFOB), lithium bis(oxalato)borate (LiB(C₂O₄)₂; LiBOB), lithium fluoromalonato (difluoro)borate (LiB(O₂CCHFCO₂)₂; LiFMDFB), lithium bis(malonato)borate [LiB(O₂CCH₂CO₂)₂], lithium bis(difluoromalonato) borate [LiB(O₂CCF₂CO₂)₂], lithium (malonatooxalato) borate [LiB(C₂O₄)(O₂CCH₂CO₂)], lithium (difluoromalonatooxalato) borate [LiB(C₂O₄)(O₂CCF₂CO₂)], lithium tris(oxalato) phosphate [LiP(C₂O₄)₃], lithium tris(difluoromalonato) phosphate [LiP(O₂CCF₂CO₂)₃], lithium difluorophosphate (LiPO₂F₂), vinyl acetate, biphenyl benzene, isopropyl benzene, hexafluorobenzene, tris(trimethylsilyl)phosphate, triphenyl phosphine, ethyl diphenylphosphinite, triethyl phosphite, tris(2,2,2-trifluoroethyl) phosphite, maleic anhydride, cesium bis(triflulorosulfonyl)imide (CsTFSI), cesium fluoride (CsF), and mixtures thereof.

13. A lithium secondary battery comprising
- an anode;
- a cathode;
- a separator; and
- a liquid electrolyte according to any of claims 1 to 12.

14. The lithium secondary battery according to claim 13, wherein the anode comprises graphitic carbon, silicon or silicon-carbon composite.

15. The lithium secondary battery according to claim 12 or 13, wherein the cathode comprises lithium-nickel-manganese-cobalt-based metal oxide of formula LiNiₓMn_{y}Co_{z}O₂ (x+y+z = 1), lithium-nickel-cobalt-aluminum-based metal oxide of formula LiNiₓCo_{y}Al_{z}O₂ (x+y+z = 1), lithium-cobalt-based metal oxide, or lithium-nickel-manganese-based metal oxide (LNMO).
